# EUROPEAN PATENT APPLICATION

(11) **EP 4 628 626 A1**
(43) Date of publication of application: **08.10.2025**
(21) Application number: 23844172.9
(22) Date of filing: 30.11.2023
(51) Int. Cl.: C23C 18/34, C23C 18/40, C23C 18/44, C23C 18/52, C25D 5/18, C25D 5/00, C23C 18/16

(54) **METHOD FOR THE MANUFACTURE OF A CORROSION-INHIBITING COATING FOR METALS, COATING THUS OBTAINABLE AND USE THEREOF AS A CORROSION INHIBITOR FOR METALS**

(30) Priority: 01.12.2022 ES 202231039
(71) Applicant: Universidad de la Laguna, 38508 San Cristóbal de La Laguna-Sta Cruz Tenerife (ES); Universidad Nacional de Rio Cuarto, 5800 Río Cuarto (AR)
(72) Inventor: GARCÍA SILVESTRO, Gonzalo, 38320 San Cristóbal de La Laguna (ES); PASTOR TEJERA, Elena, 38200 La Laguna, Santa Cruz de Tenerife (ES); LUIS SUNGA, Maximina, 38200 La Laguna, Santa Cruz de Tenerife (ES); PLANES, Gabriel Ángel, 5800 Río Cuarto (AR)
(74) Representative: ABG Intellectual Property Law, S.L.
(86) International application number: PCT/ES2023/070717
(87) International publication number: WO 2024/115805

(57) **Abstract**

**The** invention relates to a method for the manufacture of a corrosion-inhibiting coating (3) for metals (1) comprising the steps of i) diluting a surfactant (4); ii) adding a metal precursor (5); iii) reducing the metal precursor (5); iv) forming a nanostructured lattice (31) of surfactant (4) and reduced metal precursor (5) on the surface (2) of the metal (1); v) removing the surfactant (4) by means of washing, obtaining a coating (3) of reduced metal precursor (5) with a mesoporous structure (32) such that is prevents the corrosion of the metal (1). **The** coating (3) obtainable by said method and the use of said coating (3) as a corrosion-inhibiting coating for metals (1) are also objects of the present invention.

## Description

### OBJECT OF THE INVENTION

The present patent application is comprised in the nanotechnology and materials science sector, and its object relates to a method for the manufacture of a corrosion-inhibiting coating for metals comprising the steps of i) diluting a surfactant; ii) adding a metal precursor; iii) reducing the metal precursor; iv) forming a nanostructured lattice on the surface of the metal; v) removing the surfactant by means of washing, obtaining a corrosion-inhibiting coating, which has considerable advantages. Further objects of the present invention relate to a coating obtainable by said method and the use thereof as a corrosion inhibitor.

### BACKGROUND OF THE INVENTION

The phenomenon of corrosion is the deterioration of metallic structures due to the reaction of the metal with its environment. According to an estimate of the economic expenditure caused by corrosion and protection of materials, carried out in the 1970s by the British government, it was concluded that the amount of expenditure to restore damaged structures was around 3% of the gross domestic product (GDP). A more recent study by the National Association of Corrosion Engineers (NACE) in the USA estimates the worldwide cost of corrosion to be about $2.5 trillion, equivalent to 3.4% of the world's GDP.

Nowadays, corrosion is considered a very important industrial problem because it can cause accidents when the part breaks, as well as representing an important cost both economically and environmentally. Corrosion is a spontaneous electrochemical oxidation-reduction reaction in which, like in a battery, two reactions take place: the anode oxidizes, i.e., the manufactured material corrodes, while the cathode reduces a species, which in most cases is molecular oxygen. Thus, for corrosion to occur, these two reactions are necessary, at the anode and at the cathode. Attention is currently focused on delaying corrosion by protecting the anode through paints, alloys or coatings, ignoring the possibility of inhibiting the reduction reaction of molecular oxygen at the cathode, in order to prevent the corrosion process at the anode.

An illustrative document of what is known in the prior art would be what is described in patent CN114774830, where a multifunctional coating, a method of preparing same and power equipment are explained. The multifunctional coating comprises an abrasive surface layer, a metallic transition layer, a ceramic intermediate layer and a lower bonding layer, which are arranged in a stacked mode. The method of preparing the multifunctional coating comprises the step of preparing the lower bonding layer, the ceramic intermediate layer, the metallic transition layer and the abrasive surface layer sequentially on a work face through a thermal spray process. The power equipment comprises the multifunctional coating. The multifunctional coating provided by the invention has the triple functions of marine corrosion resistance, clearance control and titanium fire prevention, overcomes the defects that an existing coating is not corrosion resistant, and can meet the use requirements of highperformance aircraft engines and gas turbines.

Therefore, and in view of the above, there is still a need to minimize the corrosion process.

### DESCRIPTION OF THE INVENTION

The objective of the present invention is to minimize the phenomenon of corrosion which is an important industrial problem since it can cause accidents, such as the breakage of parts, and represents a great cost; it is estimated that in just a few seconds five tons of steel are dissolved in the world.

In particular, and contrary to the strategy usually used in the prior art to address corrosion, the solution proposed by the present invention is based on the way of inhibiting the oxygen reduction reaction, developing for this purpose a specific surface atomic structure on the material to be protected so as not to allow its interaction with molecular oxygen, suppressing the reaction at the cathode and, accordingly, preventing the corrosion of the material.

Corrosion is defined as the deterioration of a material as a result of an electrochemical attack by its environment. Corrosion is an electrochemical oxidation-reduction reaction occurring spontaneously, and in which, like in a battery, two reactions take place: the manufactured material is oxidized, i.e., it corrodes, at the anode, and a species, which in most cases is molecular oxygen, is reduced at the cathode. It is important to emphasize that for corrosion to occur, both reactions must take place: at the anode and at the cathode.

Currently, the greatest technological effort to delay corrosion has been focused on the protection of the anode through paints, alloys or coatings by other less noble materials. However, the present invention focuses on inhibiting the reduction reaction of molecular oxygen at the cathode. For this purpose, a specific surface atomic structure has been developed on the material to be protected that does not allow the interaction of the material with oxygen, suppressing any reaction at the cathode, and thereafter inhibiting the corrosion of the material.

In particular, the method for the manufacture of a corrosion-inhibiting coating for metals comprises the steps of i) diluting a surfactant in a volume of water on the metal to be coated such that the surfactant decants on the surface of the metal; ii) adding a metal precursor in said volume of water; iii) reducing the metal precursor such that it is deposited on the surface of the metal with the surfactant; iv) forming a nanostructured lattice of surfactant and reduced metal precursor on the surface of the metal; v) removing the surfactant from the surface of the metal by means of washing with water, obtaining a coating of reduced metal precursor with a mesoporous structure. This thereby gives rise to a nanostructured surface arrangement in the form of hexagonal (or substantially hexagonal) cells, specific for inhibiting the oxygen reduction reaction, thus preventing the phenomenon of corrosion from occurring on the metal it coats.

Surprisingly, metallic nanostructures have been proposed in the prior art for their application as catalysts in the oxygen reduction reaction, i.e., the complete opposite phenomenon to that observed in the present invention.

It should be mentioned that there are generally two methods to reduce the precursor. One is a chemical method, in which the metal is subjected to direct exposure by contact, either with a liquid in which the reducing substance is present, or with a gas formed by the reducing substance. Another method is an electrochemical method, which takes place in a cell, in which at least two electrodes are arranged: the electrode being modified, i.e., protecting with a coating, and an auxiliary or "sacrificial" electrode, and it involves the passage of an electric current between the two. The electrical energy applied can be measured in amperes, as current, in volts, as voltage or potential, and in coulombs, as charge quantities. Depending on the variable being controlled, there are different modalities. In the case of applying a controlled current, the process is called galvanostatic. In the case of applying a controlled potential, the process is called potentiostatic, if it is a constant potential, and potentiodynamic, if it is a variable potential.

Note that in electrochemical processes, the amount of charge is related to the amount of material that may have been deposited, such that it represents an approximate indicator of the amount of reaction that has occurred, which is especially useful in galvanostatic processes.

In addition, corrosion can be defined as an irreversible reaction of a material with its medium, involving the degradation of the material or its properties. And depending on the corrosion mechanism, chemical or dry corrosion or electrochemical or wet corrosion can occur. In chemical corrosion, the oxidation of metals occurs at a high temperature in gaseous atmospheres, giving rise to a solid film of reaction products on the surface of the metal. However, in electrochemical or wet corrosion, the action of electrochemical cells occurs, in which the metal dissolves in the anode regions, where oxidation takes place. Electrochemical corrosion occurs at moderate temperatures and in the presence of an electrolyte. This type of corrosion takes place at the interface between a material and an aqueous solution. Thus, for the corrosion phenomenon to occur, there must be, simultaneously, an oxidation reaction and a reduction reaction. In general, the oxidation of the metal either gives rise to soluble cations or forms a metal oxide. And in the case of the reduction of the species present in the solution, it gives rise to protons, water or dissolved oxygen.

The method described in the present invention allows coating and inhibiting corrosion on any metallic material. In a particular embodiment, the metal to be coated is selected from the group consisting of gold, platinum, copper, steel, and nickel or a mixture thereof.

Preferably, the mesoporous structure resulting from the method described in the present invention comprises a plurality of pores with diameters between about 2 and 50 nm, where it can be observed that the effect of inhibiting the oxygen reduction reaction is thereby accentuated. This is because the surfactant modifies the surface geometric structure of the deposited material, i.e., of the reduced metal precursor, preferably platinum, and at the same time the latter modifies the surface electronic structure, which inhibits the adsorption of molecular oxygen.

In a particular embodiment, the method of the invention uses the surfactant with about 45-55% by weight, with the % by weight being the weight of the surfactant in the total weight of the preparation, which contains all the elements, i.e., the surfactant, the metal precursor, and water.

The surfactants can be classified by their "HLB" (hydrophilic-lipophilic balance). The preferred surfactants of the invention have an HLB of at least 10 and are preferably non-ionic surfactants.

In a particular embodiment, the surfactant is or comprises a polyoxyethylene alkyl ether (such as, for example, surfactants known as Brij surfactants), preferably with about 45-55% by weight, with the % by weight being the weight of the surfactant in the total weight of the preparation, which contains all the elements, i.e., the surfactant, the metal precursor, and water. It is experimentally observed that said component enables, at said percentage, a mesoporous structure to be obtained in the coating of the reduced metal precursor.

Brij surfactants are polyoxyethylene fatty ethers derived from lauryl, cetyl, stearyl, and oleyl alcohols. Particular examples of Brij surfactants useful in the present invention include, but are not limited to, octaethylene glycol monohexadecyl ether, polyoxyethylene (10) cetyl ether or decaethylene glycol hexadecyl ether (Brij 56), polyoxyethylene (20) cetyl ether (Brij 58), polyoxyethylene (4) lauryl ether (Brij 30), and polyoxyethylene (23) lauryl ether (Brij 35), or a mixture thereof.

In a particular embodiment, the surfactant is or comprises octaethylene glycol monohexadecyl ether with about 45-55% by weight, with the % by weight being the weight of the surfactant in the total weight of the preparation, which contains all the elements, i.e., the surfactant, the metal precursor, and water. It is experimentally observed that said component enables, at said percentage, a mesoporous structure to be obtained in the coating of the reduced metal precursor.

In a particular embodiment, the surfactant is or comprises decaethylene glycol hexadecyl ether with about 45-55% by weight, with the % by weight being the weight of the surfactant in the total weight of the preparation, which contains all the elements, i.e., the surfactant, the metal precursor, and water. It is experimentally observed that said component enables, at said percentage, a mesoporous structure to be obtained in the coating of the reduced metal precursor.

Examples of other surfactants useful in the present invention include, but are not limited to, non-ionic surfactants such as, for example, poly(alkylene oxide) block copolymers, such as poly(ethylene oxide) (PEO) and poly(propylene oxide) (PPO) block copolymers, among which are, for example, poloxamers and poloxamines (commonly known with the names Pluronic and Tetronic, respectively), such as poloxamer 188 (Pluronic F-68), poloxamer 407 (Pluronic F-127), etc.; nonylphenol ethoxylates, such as the Tergitol NP series (Tergitol NP-9, etc.); octoxynols, which may vary in the number of repeating ethoxy(oxy-1,2-ethanediyl) groups, such as octoxynol-9 (Triton X-100); polyoxyethylene sorbitan esters (commonly known as Tweens), such as polysorbate 20 and polysorbate 80; sorbitan esters (commonly known as Span), such as sorbitan trioleate (Span 85) and sorbitan monolaurate; or a mixture thereof.

In another particular embodiment, the metal precursor is or comprises a metal salt with about 5-20% by weight, with the % by weight likewise being the weight of the metal precursor in the total weight of the preparation which contains the surfactant as well as the metal precursor and water.

In another particular embodiment, the metal precursor is or comprises aqueous hexachloroplatinic acid with about 5-20% by weight, with the % by weight likewise being the weight of the metal precursor in the total weight of the preparation which contains the surfactant as well as the metal precursor and water. It is experimentally observed that said component enables, at said percentage, a corrosion-inhibiting coating to be obtained with a high efficacy.

In another particular embodiment, the metal precursor is or comprises nickel chloride with about 5-20% by weight, with the % by weight likewise being the weight of the metal precursor in the total weight of the preparation which contains the surfactant as well as the metal precursor and water. It is experimentally observed that said component enables, at said percentage, a corrosion-inhibiting coating to be obtained with a high efficacy.

In another particular embodiment, the metal precursor is or comprises chloroauric acid with about 5-20% by weight, with the % by weight likewise being the weight of the metal precursor in the total weight of the preparation which contains the surfactant as well as the metal precursor and water. It is experimentally observed that said component enables, at said percentage, a corrosion-inhibiting coating to be obtained with a high efficacy.

Examples of other metal precursors useful in the present invention include, but are not limited to salts of all elements of the periodic table which can crystallize with a face-centered cubic crystal structure. These include iron, aluminum, copper, zinc, tin, nickel, lead, silver, gold, platinum, ruthenium, lanthanum, cobalt, rhodium, iridium, palladium, praseodymium, neodymium, etc., or a mixture thereof.

Complementarily, in a particular embodiment, the reduced metal precursor is one from the group of platinum, ruthenium, gold, iron, nickel, cobalt, copper, zinc, tin, and lead, or a mixture thereof, with said elements of the periodic table being those which have been confirmed to be most effective in obtaining a corrosion-inhibiting coating.

More specifically, and with respect to the chemical method, step iii) of the manufacturing method comprises exposing the metal precursor to a reducing agent, such that the metal precursor is reduced, and the reduced metal precursor is deposited on the surface of the metal with a surfactant, such that a layer or film of corrosion-inhibiting coating is formed. It should be noted that said corrosion-inhibiting coating can be obtained by means of exposure to reducing agents, either in liquid form or in the form of gas or vapor.

In a preferred embodiment of the invention, the reducing agent is one from the group of lithium aluminum hydride, sodium borohydride, and hydrazine, experimentally observing a high efficacy in obtaining a reduced metal precursor.

Moreover, and with respect to the electrochemical method for the manufacture of an inhibiting coating, step iii) comprises applying electrical energy on the dilution with a metal precursor, such that the metal precursor is reduced and deposited on the surface of the metal with the surfactant. The application time can typically range from 1.0×10⁻⁶ to 86400 seconds, and the sweep rate ranges from about 1.0×10⁻⁴ to 5.0 volts/second.

It should be mentioned, with respect to the potentiostatic electrochemical method, that applying electrical energy on the dilution with a metal precursor is preferably by means of applying a constant electrical voltage of between about -5 and 1 volts. It is thereby experimentally observed that a good performance in the reduction of the metal precursor is achieved.

And with respect to the potentiodynamic electrochemical method, it should be noted that applying electrical energy on the dilution with a metal precursor is preferably by means of applying a variable electrical voltage of between about -5 and 1 volts. It is likewise experimentally observed that a good performance in the reduction of the metal precursor is achieved.

And it should be added that with respect to the galvanostatic electrochemical method, i.e., measuring current, applying electrical energy on the dilution with a metal precursor is preferably by means of applying an electric current of between about 1.0×10⁻⁶ and -10 amperes. It is thereby experimentally observed that a good performance in the reduction of the metal precursor is achieved.

And with respect to the galvanostatic electrochemical method, measuring current, electric charge in this case, note that applying electrical energy on the dilution with a metal precursor is preferably by means of applying an electric charge of between about 0.01 and 1 Cxcm⁻². It is thereby experimentally observed that a good performance in the reduction of the metal precursor is achieved. It should be noted that the charge applied will depend on the specific metal precursor and on the desired thickness of the coating.

According to the present invention, preferably at least one of steps i) to v) is carried out at a controlled temperature of between about 55° and 65°C, experimentally finding that a better performance in obtaining the corrosion-inhibiting coating is achieved in said range.

Another object of the present invention relates to the corrosion-inhibiting coating for metals manufactured or obtainable according to the method described in detail above, as well as the use of said coating as a corrosion-inhibiting coating for metals. More particularly, the use of the coating of the invention as an anti-corrosive coating for metals is based on its unexpected capability to inhibit, minimize, or delay the oxygen reduction reaction.

All the features described in this specification (including the claims, the description, and the drawings) can be combined in any combination, with the exception of the combinations of such mutually exclusive features and/or steps.

### BRIEF DESCRIPTION OF THE DRAWINGS

These and other features and advantages of the invention will become more apparent from the following detailed description of preferred embodiments, given solely by way of illustrative and non-limiting examples in reference to the attached figures.
Figure 1 shows a view of a scheme of the chemical method for the manufacture of a corrosion-inhibiting coating, according to an embodiment of the present invention;
Figure 2 shows a view of a scheme of the electrochemical method for the manufacture of a corrosion-inhibiting coating, according to an embodiment of the present invention;
Figure 3 shows an illustrative view of a diagram of the corrosion phenomenon;
Figure 4 shows an illustrative view of a cyclic voltammogram of a mesoporous structure of platinum MP-Pt (upper panels; embodiment according to the present invention) and Pt wire (lower panels; comparative), with the metal precursor for producing MP-Pt being hexachloroplatinic acid in 0.5 M H₂SO₄ (left panels) and NaOH 0.1 M (right panels), octaethylene glycol monohexadecyl ether having been used in the case of MP-Pt, in the absence (continuous lines) and presence (discontinuous lines) of O₂.

### DETAILED DISCLOSURE OF THE INVENTION

In view of the mentioned figures, and according to the numbering used, preferred embodiments of the invention, comprising the parts and elements indicated and described in detail below, can be observed therein.

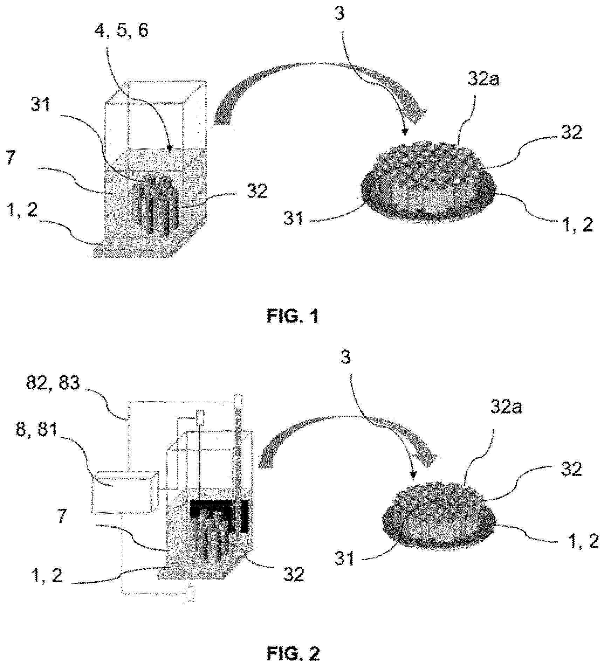

A view of a scheme of the chemical method for the manufacture of a corrosion-inhibiting coating (3) can be observed in Figure 1. The metal (1), the surface (2) of which is to be protected with a coating (3) with a lattice (31) of mesoporous structure (32), can be seen. It is in the corresponding pores (32a) that the surfactant (4) is lodged, to finally be removed with a water bath (7), the metal precursor (5) being reduced with the reducing agent (6).

A view of a scheme of an electrochemical method for the manufacture of a corrosion-inhibiting coating (3) can be observed in Figure 2. The metal (1), the surface (2) of which is to be protected by a coating (3) with a lattice (31) of mesoporous structure (32), can also be seen. Similarly, it is in the corresponding pores (32a) that the surfactant (4) is lodged, to finally be removed with a water bath (7), the metal precursor (5) being reduced with the reducing agent (6). A device for applying electrical energy (8), either in the form of electrical voltage (81), electric current (82) or electrical charge (83), depending on the type of method applied, is furthermore observed.

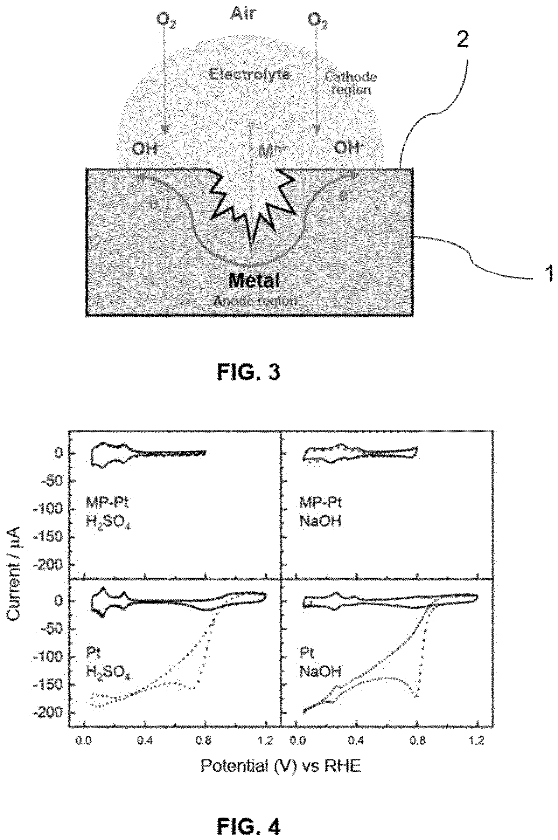

Figure 4 shows a preferred embodiment of the invention with the electrocatalytic activity of a gold electrode with a platinum (Pt) coating caused by an electrochemical reduction method to obtain a mesoporous structure (32) with a nanostructured and specific surface arrangement to inhibit the oxygen reduction reaction.

First, the steps of synthesizing are preferably performed by means of the electrochemical reduction of a mixture of aqueous hexachloroplatinic acid (8%) and octaethylene glycol monohexadecyl ether (C16EO8) at 50% by weight, on an Au disk electrode (ϕ = 7 mm) at 60°C and 0.15 vs RHE. The results correspond to an electrode obtained after passing a 272 mC charge during the deposition. Finally, the electrode is kept in distilled water (7) for 48 h, replacing the liquid every 2 h. This synthesis causes the deposition of platinum (Pt) from the solution on the surface (2) of the gold electrode, giving rise to a platinum (Pt) coating (3) with a mesoporous structure (32) which is characterized by containing pores (32a) with diameters between 2 and 50 nm.

An illustrative view of a diagram of the corrosion phenomenon on the surface (2) of a metal (1) can be observed in Figure 3. The corrosion is located on the anode regions of the metal (1), which is where oxidation takes place, whereas the reduction of the medium occurs in the cathode regions. Since an electrochemical circuit is established, the electrons circulate through the metal from the anode to the cathode, and the circuit is closed by means of the electrolyte where the ions circulate.

However, if the surface of the metal is protected with the coating proposed in the present invention interaction with molecular oxygen is avoided, therefore suppressing the reduction reaction (necessary for oxidation to exist) and, accordingly, corrosion of the material is prevented.

From the thermodynamic point of view, the corrosion process is measured by Gibbs free energy (ΔG). The more negative this value is (ΔG<0), the greater the tendency for the reaction to be carried out. The value of ΔG is related to the electromotive force (e.m.f.) or potential (E) of a corrosion cell according to the ratio ΔG=-n•F•E, where 'n' is the number of electrons exchanged, F is Faraday's constant (96500 coulomb/chemical equivalent). Therefore, the larger the values of E, the greater the tendency of the cell to corrode, but it should be noted that although thermodynamics indicates that a corrosion reaction may occur, it may or may not occur due to the formation of protective or passive films that delay the reaction kinetics.

To avoid corrosion, nanoparticles can be used as a coating material (3), which acts as a barrier to control the corrosion rate. The present invention focuses on inhibiting the reduction of molecular oxygen, which acts as a cathodic reaction, and is the most common (20% of air is made up of molecular oxygen) and important in corrosion processes. To that end, a specific surface atomic metallic structure, or mesoporous structure (32), has been developed on the metal (1) to be protected. And platinum (Pt) is preferably used for said mesoporous structure (32), because the inventors have observed that it is surprisingly the material that exhibits the highest efficiency towards the oxygen reduction reaction on a polycrystalline gold (Au) surface (2).

It is important to highlight that the kinetics and mechanism of the oxygen reduction reaction (ORR) have been extensively investigated in the prior art on numerous catalytic materials, with platinum being the best electrocatalyst as it allows the reduction of O₂ into four electrons at relatively low overpotentials. Therefore, the results obtained in the present invention with coatings of electrocatalytic materials are completely unexpected, demonstrating that it is possible to inhibit the electrocatalytic activity towards ORR, even of the material which currently exhibits the highest catalytic activity: platinum.

And an illustrative view of a cyclic voltammogram in relation to a metal precursor (5) (hexachloroplatinic acid), and a surfactant (4) (octaethylene glycol monohexadecyl ether) can be observed in Figure 4. Specifically, experiments have been carried out on a platinum (Pt) mesoporous structure (32) and on a polycrystalline platinum (Pt) wire, in the absence and in the presence of molecular oxygen in a wide pH range.

More specifically, it should be noted that for the study of the electrocatalytic activity of the electrode with the platinum (Pt) mesoporous structure (32) towards the oxygen reduction reaction, a three-electrode cell has been used, using a reversible hydrogen electrode (RHE) as a reference and a glassy carbon counter electrode. The Au electrode with a platinum (Pt) mesoporous coating (3) was used as the working electrode. Said Figure 4 shows the performance of the synthesized electrode towards the oxygen reduction reaction, by means of a dominant cathode half-reaction in aerated aqueous media, using sulfuric acid or sodium hydroxide as a background electrolyte. The behavior in the presence or absence of oxygen indicates no electrolytic activity towards oxygen reduction as no increase of the cathodic current was observed during the experiments in the presence of oxygen.

For comparative purposes, the electrocatalytic activity of an unmodified platinum (Pt) wire in the absence and presence of oxygen in sulfuric acid or sodium hydroxide as the background electrolyte is studied. It can be observed in said Figure 4 that in the presence of oxygen, cathodic currents corresponding to oxygen reduction appear in the case of platinum (Pt) wire due to its high electrocatalytic activity towards this reaction.

Finally, it is experimentally demonstrated, by means of the described embodiments of the invention, that the synthesized material, i.e., the coated metal, is not electroactive towards the oxygen reduction reaction in a wide pH range, with a high impact in the field of corrosion.

Additionally, by applying a method as described above for the deposition of platinum on gold but varying the metal precursor and/or the polycrystalline metal to be coated, the following mesoporous coatings have been manufactured: platinum on platinum, platinum on copper, platinum on stainless steel, platinum on nickel, gold on gold, and nickel on nickel. The metal precursor used in these examples for the platinum deposition was aqueous hexachloroplatinic acid (8%), for nickel it was 1.8 M nickel chloride (NiCl₂), and for gold it was 0.2 M chloroauric acid H[AuCl₄]. In all these examples, it has been observed that there is deposition of the reduced metal precursor with a mesoporous structure and that corrosion is inhibited.

More particularly, as observed in Figures 1 and 2, the method for the manufacture of a corrosion-inhibiting coating (3) for metals (1) comprises the steps of i) diluting a surfactant (4) in a volume of water (7) on the metal (1) to be coated such that the surfactant (4) decants on the surface (2) of the metal (1); ii) adding a metal precursor (5) in said volume of water (7); iii) reducing the metal precursor (5) such that it is deposited on the surface (2) of the metal (1) with the surfactant (4); iv) forming a nanostructured lattice (31) of surfactant (4) and reduced metal precursor (5) on the surface (2) of the metal (1); v) removing the surfactant (4) from the surface (2) of the metal (1) by means of washing with water (7), obtaining a coating (3) of reduced metal precursor (5) with a mesoporous structure (32). It should be noted that washing with water (7) in this preferred embodiment consists of keeping in distilled water (7) for 48 h, replacing the liquid every 2 h.

Preferably, as observed in Figures 1 and 2, the mesoporous structure (32) comprises a plurality of pores (32a) with diameters between about 2 and 50 nm.

In further detail, as observed in Figures 1 and 2, the surfactant (4) is octaethylene glycol monohexadecyl ether with about 45-55% by weight, with the preferred and optimal value being the value of about 50% by weight.

Moreover, as observed in Figures 1 and 2, the metal precursor (5) is aqueous hexachloroplatinic acid with about 5-20% by weight, with the preferred and optimal value being the value of about 8% by weight.

According to another aspect of the invention, as observed in Figures 1 and 2, the reduced metal precursor (5) is one from the group of platinum, ruthenium, gold, iron, nickel, cobalt, copper, zinc, tin, and lead, or a mixture thereof, with the preferred reduced metal precursor being platinum.

Optionally, as observed in Figure 1, the method for the chemical manufacture of a corrosion-inhibiting coating (3) for metals (1) is characterized in that step iii) comprises exposing the metal precursor (5) to a reducing agent (6), such that the metal precursor (5) is reduced, and the reduced metal precursor (5) is deposited on the surface (2) of the metal (1) with the surfactant (4).

And as can be observed in Figure 1, the reducing agent (6) is one from the group of lithium aluminum hydride, sodium borohydride, and hydrazine, or a mixture thereof.

Alternatively, as observed in Figure 2, the method for the electrochemical manufacture of a corrosion-inhibiting coating (3) for metals (1) is characterized in that step iii) comprises applying electrical energy (8) on the dilution with a metal precursor (5), such that the metal precursor (5) is reduced and deposited on the surface (2) of the metal (1) with the surfactant (4).

Optionally, as observed in Figure 2, applying electrical energy (8) on the dilution with a metal precursor (5) is performed by means of applying a constant electrical voltage (81) of between about -5 and 1 volts.

Optionally, as observed in Figure 2, applying electrical energy (8) on the dilution with a metal precursor (5) is performed by means of applying a variable electrical voltage (81) of between about -5 and 1 volts.

Optionally, as observed in Figure 2, applying electrical energy (8) on the dilution with a metal precursor (5) is performed by means of applying an electric current (82) of between about 1,0 x 10⁻⁶ and -10 amperes.

Optionally, as observed in Figure 2, applying electrical energy (8) on the dilution with a metal precursor (5) is performed by means of applying an electric charge (83) of between about 0.01 and 1 Cxcm⁻².

Complementarily, as observed in Figures 1 and 2, at least one of steps i) to v) is carried out at a controlled temperature of between about 55° and 65°C, preferably being a temperature of about 60 °C.

Moreover, as observed in Figures 1 and 2, an object of the present invention relates to the corrosion-inhibiting coating (3) for metals (1) manufactured according to the method described above.

Finally, as observed in Figures 1 and 2, the invention also includes the use of the corrosion-inhibiting coating (3) for metals (1).

The details, forms, dimensions, and other accessory elements, as well as the components used in the implementation of the method for the manufacture of a corrosion-inhibiting coating (3) for metals (1), may be suitably replaced with others that are technically equivalent and do not depart from the essential nature of the invention or from the scope defined by the claims included after the following list.

As used herein, the term "about" or "around" when applied to one or more values of interest, refers to a value that is similar to an indicated reference value. In certain modalities, the term "about" or "around" as used herein means that a number may vary up to ± 20%, preferably within ± 10%, and more preferably within ± 5%. When "about" is used preceding a range, it applies to the upper and lower limits of the range.

In fact, the person skilled in the art knows that numerical values related to measurements are subject to measurement errors that limit their precision. When terms such as "around" or "about" are applied to a particular value (e.g., "around 200°C" or "about 200°C") or range (e.g., "from about x to about y"), the value or range can be interpreted as being only as precise as the method used to measure it. Unless specifically stated otherwise, the general convention in scientific and technical literature can be applied such that the last digit of the numerical values preferentially indicates the precision of the measurement. Therefore, unless other margins of error are given, the maximum margin can be determined by applying the convention of rounding to the last decimal place. For example, a value of 3.5 preferably has a margin of error of 3.45 to 3.54 and a range of 2% to 10% preferably covers a range of 1.5% to 10.4%. Said variations of a specified value are understood by the skilled person and are within the context of the present invention. Furthermore, in order to provide a more concise description, some of the quantitative expressions given herein are not qualified with the term "about". It is understood that, whether or not the term "about" is used explicitly, each amount given herein is intended to refer to the actual given value, and also to the approximation to said given value that would reasonably be deduced based on ordinary skill in the art, including equivalents and approximations due to experimental and/or measurement conditions for said given value.

Concentrations, amounts and other numerical data may be expressed or presented herein in a range format. It is to be understood that said range format is used merely for convenience and brevity and, therefore, should be interpreted flexibly to include not only the numerical values explicitly listed as the limits of the range, but also to include all individual numerical values or sub-ranges comprised within that range as if each numerical value and sub-range were explicitly listed. As an illustration, a numerical range of "about 1% by weight to about 5% by weight" should be interpreted to include not only the values explicitly listed from about 1% by weight to about 5% by weight, but also includes individual values and sub-ranges within the indicated range. Therefore, this numerical range includes individual values, such as 2, 3 and 4, and sub-ranges such as 1-3, 2-4 and 3-5, etc. The same principle applies to ranges mentioning a single numerical value.

### List of reference numbers:

- 1: metal
- 2: surface
- 3: coating
- 31: lattice
- 32: mesoporous structure
- 32a: pore
- 4: surfactant
- 5: metal precursor
- 6: reducing agent
- 7: water
- 8: electrical energy
- 81: electrical voltage
- 82: electric current
- 83: electric charge

## Claims

1. A method for the manufacture of a corrosion-inhibiting coating (3) for metals (1) comprising the steps of:
i) diluting a surfactant (4) in a volume of water (7) on the metal (1) to be coated such that the surfactant (4) decants on the surface (2) of the metal (1);
ii) adding a metal precursor (5) in said volume of water (7);
iii) reducing the metal precursor (5) such that it is deposited on the surface (2) of the metal (1) with the surfactant (4);
iv) forming a nanostructured lattice (31) of surfactant (4) and reduced metal precursor (5) on the surface (2) of the metal (1);
v) removing the surfactant (4) from the surface (2) of the metal (1) by means of washing with water (7), obtaining a coating (3) of reduced metal precursor (5) with a mesoporous structure (32).

2. **The** method for the manufacture of a corrosion-inhibiting coating (3) for metals (1) according to claim 1, **characterized in that** the mesoporous structure (32) comprises a plurality of pores (32a) with diameters between about 2 and 50 nm.

3. **The** method for the manufacture of a corrosion-inhibiting coating (3) for metals (1) according to any of the preceding claims, **characterized in that** the surfactant (4) is a non-ionic surfactant, preferably a polyoxyethylene alkyl ether, more preferably octaethylene glycol monohexadecyl ether and/or decaethylene glycol hexadecyl ether with about 45-55% by weight.

4. **The** method for the manufacture of a corrosion-inhibiting coating (3) for metals (1) according to any of the preceding claims, **characterized in that** the metal precursor (5) is aqueous hexachloroplatinic acid, nickel chloride and/or chloroauric acid with about 5-20% by weight.

5. **The** method for the manufacture of a corrosion-inhibiting coating (3) for metals (1) according to any of claims 1 to 3, **characterized in that** the reduced metal precursor (5) is one from the group of platinum, ruthenium, gold, iron, nickel, cobalt, copper, zinc, tin, and lead, or any mixtures thereof.

6. **The** method for the manufacture of a corrosion-inhibiting coating (3) for metals (1) according to any of the preceding claims, **characterized in that** step iii) comprises exposing the metal precursor (5) to a reducing agent (6), such that the metal precursor (5) is reduced, and the reduced metal precursor (5) is deposited on the surface (2) of the metal (1) with the surfactant (4).

7. **The** method for the manufacture of a corrosion-inhibiting coating (3) for metals (1) according to claim 6, **characterized in that** the reducing agent (6) is one from the group of lithium aluminum hydride, sodium borohydride, and hydrazine.

8. **The** method for the manufacture of a corrosion-inhibiting coating (3) for metals (1) according to any of claims 1 to 5, **characterized in that** step iii) comprises applying electrical energy (8) on the dilution with a metal precursor (5), such that the metal precursor (5) is reduced and deposited on the surface (2) of the metal (1) with the surfactant (4).

9. **The** method for the manufacture of a corrosion-inhibiting coating (3) for metals (1) according to claim 8, **characterized in that** applying electrical energy (8) on the dilution with a metal precursor (5) is performed by means of applying a constant electrical voltage (81) of between -5 and 1 volts.

10. **The** method for the manufacture of a corrosion-inhibiting coating (3) for metals (1) according to claim 8, **characterized in that** applying electrical energy (8) on the dilution with a metal precursor (5) is performed by means of applying a variable electrical voltage (81) of between -5 and 1 volts.

11. **The** method for the manufacture of a corrosion-inhibiting coating (3) for metals (1) according to claim 8, **characterized in that** applying electrical energy (8) on the dilution with a metal precursor (5) is performed by means of applying an electric current (82) of between 1.0 x 10⁻⁶ and -10 amperes.

12. **The** method for the manufacture of a corrosion-inhibiting coating (3) for metals (1) according to claim 8, **characterized in that** applying electrical energy (8) on the dilution with a metal precursor (5) is performed by means of applying an electric charge (83) of between 0.01 and 1 Cxcm⁻².

13. **The** method for the manufacture of a corrosion-inhibiting coating (3) for metals (1) according to any of the preceding claims, **characterized in that** at least one of steps i) to v) is carried out at a controlled temperature of between about 55° and 65°C.

14. A corrosion-inhibiting coating (3) for metals (1) obtainable according to the method of any of claims 1 to 13.

15. Use of the coating (3) according to claim 14 as a corrosion-inhibiting coating for metals (1).
